# EUROPÄISCHE PATENTSCHRIFT

(11) **EP 4 777 838 B1**
(45) Veröffentlichungstag und Bekanntmachung des Hinweises auf die Patenterteilung: **09.12.2026**
(21) Anmeldenummer: 25740732.0
(22) Anmeldetag: 09.07.2025
(51) Int. Cl.: G01P 3/44, G01P 3/48, A61C 1/00, A61C 1/05, A61C 1/06, G01H 1/00

(54) **VERFAHREN ZUM BETREIBEN EINES MEDIZINISCHEN BEHANDLUNGSINSTRUMENTS**
METHOD FOR OPERATING A MEDICAL TREATMENT INSTRUMENT
PROCÉDÉ DE FONCTIONNEMENT D'UN INSTRUMENT DE TRAITEMENT MÉDICAL

(30) Priorität: 11.07.2024 EP 24188131
(43) Veröffentlichungstag der Anmeldung: 22.07.2026
(73) Patentinhaber: KaVo Dental GmbH, 88400 Biberach an der Riss (DE)
(72) Erfinder: JALILIAN, Arash, 89077 Ulm (DE); BUERK, Richard, 88433 Schemmerhofen (DE)
(74) Vertreter: Thun, Clemens
(86) Internationale Anmeldenummer: PCT/EP2025/069612
(87) Internationale Veröffentlichungsnummer: WO 2026/013141

(56) Entgegenhaltungen:
- EP-A1- 0 952 454
- DE-A1- 102017 203 567
- US-A- 4 764 871
- US-A1- 2007 190 484
- US-A1- 2018 320 623

## Beschreibung

Die vorliegende Erfindung betrifft ein Verfahren zur Bestimmung der Drehzahl eines medizinischen, insbesondere eines zahnmedizinischen Behandlungsinstruments, welches eine mittels Druckluft betriebene Turbine aufweist. Ferner betrifft die Erfindung ein Verfahren zur Regelung der Drehzahl eines derartigen medizinischen Behandlungsinstruments sowie vorzugsweise zur Bestimmung weiterer Betriebsparameter wie z.B. der Last, des Turbinentyps oder dergleichen.

Insbesondere in der Zahnmedizin kommen auch heute noch vielfach Behandlungsinstrumente zum Einsatz, welche eine mittels Druckluft betriebene Turbine aufweisen, über die ein Behandlungswerkzeug, beispielsweise ein zahnmedizinischer Bohrer angetrieben wird. Im Vergleich zu Motorhandstücken, welche einen Elektromotor zum Antreiben des Behandlungswerkzeugs aufweisen, sind derartige Turbinenhandstücke einfacher aufgebaut und dementsprechend günstiger in ihrer Herstellung. Ferner können mit derartigen Turbinenhandstücken äußerst hohe Drehzahlen erreicht werden, welche für die Durchführung von zahnärztlichen Behandlungen oftmals von Vorteil sind.

Ein Nachteil im Vergleich zu elektrischen Motorhandstücken besteht bei derartigen Turbinenhandstücken allerdings darin, dass es schwieriger ist, die zur Durchführung einer zahnärztlichen Behandlung gewünschte Drehzahl beizubehalten. In der Vergangenheit wurden überwiegend völlig ungeregelte Luftturbinen verwendet, wobei der dem Handstück zugeführte Luftdruck allenfalls durch den Zahnarzt an der entsprechenden Behandlungseinheit eingestellt wurde. Die Turbine wird in diesem Fall also mit einem bestimmten vorgegebenen, in der Regel etwas überhöhten Druck beaufschlagt, wobei sich ihr Arbeitspunkt dann unter Last bei einer deutlich kleineren Drehzahl einstellt und sich je nach Last ein deutlich unterschiedlicher Drehzahlabfall ergibt.

Eine derartige ungeregelte Turbine ermöglicht somit kein feinfühliges Arbeiten, da aufgrund der hohen Ausgangsdrehzahl zunächst ein hoher Drehimpuls vorliegt und dieser dann mit fallender Drehzahl stark abnimmt. Die im Leerlauf vorliegende sehr hohe Drehzahl führt ferner zu einem höheren Verschleiß der Lager und somit zu einer geringeren Lebensdauer des Handstücks.

Aus den oben genannten Gründen gibt es bereits Ansätze, derartige Turbinen zu regeln, um den Nachteilen einer hohen Leerlaufdrehzahl und dem Einbrechen der Drehzahl unter Last zu begegnen.

Bekannt ist beispielsweise aus der EP 2 724 684 B1, die Drehzahl einer zahnärztlichen Turbine mithilfe eines Drehzahlsensors zu erfassen und in Reaktion hierauf den Druck der zugeführten Luft zum Antreiben der Turbine anzupassen. Ein derartiger Drehzahlsensor in der Turbine führt allerdings zu einer erhöhten Komplexität des ansonsten rein mechanisch bzw. pneumatisch aufgebauten Handstücks, da zusätzlich eine Sensorik eingebaut werden muss, welche ferner in der Lage sein muss, den bei einer Reinigung und/oder Sterilisation des Handstücks vorliegenden Bedingungen zu widerstehen. Ferner muss in diesem Fall die Ansteuerung des Handstücks durch die zahnärztliche Versorgungseinheit speziell auf die Sensorik der Turbine abgestimmt sein.

Weiterhin ist bekannt, die Drehzahl einer Turbine auf Basis eines zeitveränderlichen Signals zu ermitteln, welches in geeigneter Weise erfasst und anschließend durch Auswertung des Frequenzspektrums mittels schneller Fourier-Transformation (FFT) analysiert wird. Eine derartige Vorgehensweise wird beispielsweise in der DE 10 2017 203 567 A1 vorgeschlagen. Dieses Verfahren erfordert allerdings eine sehr hohe Rechenleistung innerhalb der das Signal analysierenden Steuervorrichtung, was wiederum zu hohen Kosten führt. Die Durchführung der Fourier-Transformation führt ferner zu Totzeiten, da hierfür eine gewisse Menge an Daten erfasst werden muss, sodass eine verhältnismäßig geringe Regeldynamik vorliegt. Eine vergleichbare Vorgehensweise ist auch aus der US 2007/190484 A1 bekannt, welche die Merkmale des Oberbegriffs des Anspruchs 1 offenbart. Hier wird ein Verfahren zur Bestimmung der Drehzahl eines zahnmedizinischen Behandlungsinstruments beschrieben, welches eine druckluftbetriebene Turbine sowie einen Sensor zur Bestimmung des Körperschalls aufweist, wobei die Frequenz der Drehbewegung mittels digitaler Fouriertransformation ermittelt wird.

Als Alternative wird deshalb auch vorgeschlagen, die Drehzahl durch Bewertung der pulsierenden Druckschwankungen in der Rückleitung einer zahnärztlichen Turbine mithilfe eines Sensors zu ermitteln. Diese in der WO 99/58984 A1 beschriebene Lösung erfordert nicht eine vergleichbar hohe Rechenleistung, wie die in dem zuvor beschriebenen Stand der Technik eingesetzte Fourier-Transformation. Allerdings muss in diesem Fall exakt die Anzahl der Turbinenschaufeln bekannt sein, sodass diese Vorgehensweise wiederum nur für eine bestimmte Art von Turbinen geeignet ist. Ein weiteres Problem dieses Verfahrens besteht darin, dass die Amplitude der Druckschwankungen in der Rückluft von der jeweiligen Bauart der Turbine abhängig ist, was ebenfalls gegen einen vielseitigen Einsatz dieses Verfahrens spricht.

Außerhalb des Dentalbereichs ist ferner aus der EP 0 952 454 A1 eine Vorrichtung zur Drehzahlerfassung von Turboladern an Brennkraftmaschinen bekannt. Ein piezoelektrischer Beschleunigungsaufnehmer erzeugt ein Signal, das mittels anpassbarem Bandpassfilter gefiltert wird, mit einem Komparator mit Hysterese in ein Rechtecksignal umgewandelt und mittels eines Frequenz-Spannungs-Wandlers in ein Regelsignal umgewandelt wird. Die Signalverarbeitung ist hier nicht digital. Ferner beschreibt die US 2018/320623 A1 ein System zur Drehzahlerfassung wiederum von Turboladern an Brennkraftmaschinen. Ein Mikrophon erzeugt ein Signal, das digital Fourier-transformiert wird und anschließend mittels anpassbarem Bandpassfilter gefiltert wird. Auf gleiche Weise wird das Signal eines Beschleunigungsaufnehmers verarbeitet. Aus beiden bestimmten Frequenzspektren wird die Drehgeschwindigkeit ermittelt.

Schließlich zeigt die US 4 764 871 A ein Verfahren zur Verarbeitung eines sinusförmigen, drehzahlabhängigen Signals eines Drehzahlgebers, bei dem ein Kalman-Filter eingesetzt wird, um aus einem verzerrten Eingangssignal ein signaltechnisch verbessertes Ausgangssignal zu gewinnen.

Der vorliegenden Erfindung liegt zunächst die Aufgabenstellung zugrunde, eine Möglichkeit anzugeben, in verbesserter Weise die Drehzahl eines medizinischen, insbesondere eines zahnmedizinischen Turbinenhandstücks zu ermitteln. Weiterhin soll mithilfe der vorliegenden Erfindung auch ein Verfahren zur Verfügung gestellt werden, mit dessen Hilfe effizient die Drehzahl einer medizinischen Turbine geregelt werden kann.

Diese Aufgaben werden durch die in den unabhängigen Ansprüchen angegebenen Erfindungen gelöst. Vorteilhafte Weiterbildungen der Erfindungen sind Gegenstand der abhängigen Ansprüche.

In einem ersten Schritt wird erfindungsgemäß vorgeschlagen, zum Ermitteln der Drehzahl einer medizinischen Turbine ein Drehzahlsignal mithilfe eines Sensors zu erfassen, welcher den Körperschall der Turbine aufnimmt. Es kann sich hierbei beispielsweise um ein akustisches Mikrofon, einen MEMS-Sensor oder einen Piezowandler handeln. Auch die Verwendung eines Mikrofons hat sich als funktionsfähig erwiesen und andere Schallwandler (elektrodynamisch oder ähnliches) wären ebenfalls denkbar.

Der Schallwandler wird hierbei idealerweise nahe der Turbine angebracht (beispielsweise im Schlauch oder der Kupplung zum Anschließen des Turbinenhandstücks), um den Körperschall optimal zu erfassen. Das erfasste Signal wird dann durch einen geeigneten Verstärker aufbereitet, nachfolgend digitalisiert und einem Prozessor zugeführt, welcher im Rahmen einer digitalen Signalverarbeitung die Drehzahl ermittelt. Hierbei wird zunächst auf Basis einer Nulldurchgangserkennung des digitalisierten Körperschallsignals eine Periodendauer ermittelt und anschließend auf Basis der ermittelten Periodendauer durch einen sog. Beobachter eine modellbasierte Drehzahl geschätzt. Dabei wird das digitale Signal vor der Nulldurchgangserkennung mithilfe eines Bandpassfilters gefiltert, wobei die Grenzfrequenzen des Bandpassfilters durch den Beobachter abhängig von der modellbasierten Drehzahl kontinuierlich angepasst werden.

Gemäß einem ersten erfindungsgemäßen Aspekt wird also ein Verfahren zur Bestimmung der Drehzahl eines medizinischen, insbesondere eines zahnmedizinischen Behandlungsinstruments, welches eine mittels Druckluft betriebene Turbine aufweist, vorgeschlagen, wobei das Verfahren die folgenden Schritte beinhaltet:
- Erfassen eines analogen Körperschallsignals mithilfe eines Sensors, der einen Körperschall des Behandlungsinstruments aufnimmt,
- Umwandeln des von dem Sensor erfassten analogen Körperschallsignals in ein digitalisiertes Körperschallsignal,
- Ermitteln einer Periodendauer auf Basis einer Nulldurchgangserkennung des digitalisierten Körperschallsignals, und
- Schätzen einer modellbasierten Drehzahl durch einen Beobachter auf Basis der ermittelten Periodendauer,
wobei das digitalisierte Signal vor der Nulldurchgangserkennung mithilfe eines Bandpassfilters gefiltert wird und die Grenzfrequenzen des Bandpassfilters durch den Beobachter abhängig von der modellbasierten Drehzahl kontinuierlich angepasst werden.

Gemäß der vorliegenden Erfindung wird ferner eine Einheit zum Betreiben eines medizinischen, insbesondere eines zahnmedizinischen Behandlungsinstruments, welches eine mittels Druckluft betriebene Turbine aufweist, vorgeschlagen, wobei die Einheit einen Sensor zum Aufnehmen eines analogen Körperschallsignals des Behandlungsinstrument aufweist und dazu ausgebildet ist, basierend auf dem von dem Sensor erfassten Körperschallsignal eine Drehzahl der Turbine entsprechend dem oben beschriebenen Verfahren zu bestimmen.

Im Vergleich zur oben erwähnten, im Stand der Technik vorgeschlagenen Drehzahlermittlung mittels Fourier-Transformation des erfassten Signals ist der Rechenaufwand zur Bestimmung der Drehzahl bei der erfindungsgemäß vorgeschlagenen Vorgehensweise deutlich geringer. Dies führt nicht nur zu Kostenvorteilen bei der Realisierung der Steuereinheit zum Betreiben des medizinischen Behandlungsinstruments, sondern auch zu einer erhöhten Dynamik, welche letztendlich eine bessere und effizientere Regelung der Drehzahl ermöglicht.

Dabei kann dem erfindungsgemäßen Verfahren vorzugsweise ein mathematisches Modell des Ventils zur Ansteuerung des Behandlungsinstruments, des Schlauchs zur Versorgung des Instruments und der Turbine zugrunde liegen, wobei dieses Modell dann die Implementierung des oben erwähnten Beobachters ermöglicht, über den mit hoher Genauigkeit die Drehzahl basierend auf der ermittelten Periodendauer geschätzt und nachfolgend auch eine Regelung der Drehzahl unterstützt werden kann. Vorzugsweise ist hierbei vorgesehen, dass der Beobachter als sog. Kalman-Filter implementiert ist, wobei bevorzugt dem Kalman-Filter zumindest folgende Eingangsgrößen für die Schätzung der modellbasierten Drehzahl zugeführt werden:
a) die auf Basis der Nulldurchgangserkennung ermittelte Periodendauer sowie
b) die Stellgröße eines zum Anpassen des Antriebsdrucks verwendeten Ventilelements, also beispielsweise die Ventilspannung;
und wobei darüber hinaus auch weitere Größen wie z.B. der Antriebsdruck der dem Behandlungsinstrument zugeführten Druckluft und/oder von einem nachfolgend noch näher erläuterten Störbeobachter ermittelte Größen berücksichtigt werden können.

Dabei kann besonders bevorzugt vorgesehen sein, dass die Periodendauer des digitalisierten Körperschallsignals über mehrere Perioden hinweg bestimmt und der daraus resultierende Mittelwert als Eingangsgröße für den Beobachter verwendet wird.

Der zum Erfassen des Körperschallsignals verwendete Sensor kann wie bereits erwähnt in unterschiedlicher Weise ausgeführt sein. Bevorzugt kommt ein Mikrofon, ein MEMS-Sensor oder Piezowandler zum Einsatz, wobei sich der Einsatz des Piezowandlers als besonders vorteilhaft herausgestellt hat. Der Sensor kann hierbei in einem Schlauch, der zur Versorgung des medizinischen Behandlungsinstruments dient und beispielsweise von einer zahnärztlichen Versorgungseinheit zu dem Behandlungsinstrument führt, oder in einer Kupplungseinheit angeordnet sein, die zum Anschließen des Instruments vorgesehen ist. Derartige Kupplungseinheiten sind aus dem Stand der Technik bekannt und ermöglichen das einfache und schnelle Anschließen entsprechender Behandlungsinstrumente, denen dann über die Kupplungseinheit die zum Betreiben der Turbine erforderliche Druckluft sowie auch weitere Medien wie z.B. Luft, Wasser und/oder Strom zur Verfügung gestellt werden. Das Verlagern des Sensors in die Kupplungseinheit oder den Schlauch ermöglicht hierbei, die Turbinenhandstücke selbst unverändert zu belassen, wobei trotz allem nunmehr eine Drehzahlermittlung und damit letztendlich ein geregelter Betrieb ermöglicht wird.

Die mithilfe der erfindungsgemäßen Vorgehensweise ermittelte Drehzahl der Turbine kann dann dazu genutzt werden, während des Betriebs eines medizinischen, insbesondere eines zahnmedizinischen Behandlungsinstruments mit Druckluft eine Regelung der Drehzahl vorzunehmen, wobei die der Turbine zugeführte Druckluft mithilfe eines elektrisch ansteuerbaren Ventils eingestellt wird. In einer ersten Variante kann dabei die Ansteuerung des Ventils mithilfe eines herkömmlichen Reglers erfolgen, beispielsweise eines PID-Reglers, dem als Eingangsgröße die Drehzahl zugeführt wird, die in der oben beschriebenen erfindungsgemäßen Weise ermittelt wurde.

Besonders bevorzugt ist jedoch vorgesehen, dass die der Turbine zugeführte Druckluft mithilfe eines elektrisch ansteuerbaren Ventils eingestellt wird und ein Steuersignal für das Ventil durch einen modellbasierten Zustandsregler auf Basis zumindest einer aktuellen Drehzahl des medizinischen Behandlungsinstruments, einer Solldrehzahl für das medizinische Behandlungsinstrument sowie eines elektrischen Ventilstroms bestimmt wird. Die aktuelle Drehzahl kann hierbei wie bereits erwähnt besonders bevorzugt entsprechend dem oben beschriebenen Verfahren ermittelt werden. Grundsätzlich könnte allerdings die Regelung der Drehzahl auch auf Basis eines Ist-Werts durchgeführt werden, der anderweitig ermittelt wurde. Zur Ansteuerung der Turbine kommt hierbei als Aktuator ein Verstellventil zum Einsatz, welches den zugeführten Luftstrom stellen bzw. regeln kann, wobei durch die Verwendung des modellbasierten Zustandsreglers dann im Vergleich zu der oben erwähnten klassischen PID-Regelung eine deutlich dynamischere Regelung ohne größere Überschwingungen erzielt wird, sodass die Turbine schneller und effizienter auf die gewünschte Drehzahl eingestellt werden kann.

Erfindungsgemäß wird also auch ein Verfahren zur Regelung der Drehzahl eines medizinischen, insbesondere eines zahnmedizinischen Behandlungsinstruments, welches eine mittels Druckluft betriebene Turbine aufweist, vorgeschlagen, wobei die der Turbine zugeführte Druckluft mithilfe eines elektrisch ansteuerbaren Ventils eingestellt wird und ein Steuersignal für das Ventil durch einen modellbasierten Zustandsregler auf Basis zumindest folgender digitalisierter Eingangsgrößen bestimmt wird:
- einer aktuellen Drehzahl des medizinischen Behandlungsinstruments, sowie
- einer Solldrehzahl für das medizinische Behandlungsinstrument,

Ferner wird eine Einheit zum Betreiben eines medizinischen, insbesondere eines zahnmedizinischen Behandlungsinstruments, welches eine mittels Druckluft betriebene Turbine aufweist, vorgeschlagen, wobei die Einheit ein steuerbares Ventil zum Einstellen einer der Turbine zugeführten Druckluft aufweist und dazu ausgebildet ist, die Drehzahl des Behandlungsinstruments entsprechend dem oben beschriebenen Verfahren einzustellen.

Besonders bevorzugt können als Eingangsgrößen für den Zustandsbeobachter zusätzlich auch der Antriebsdruck der dem Behandlungsinstrument zugeführten Druckluft und/oder der elektrische Ventilstrom genutzt werden. Das Ventil ist hierbei vorzugsweise durch ein elektromagnetisches Proportionalventil gebildet, welches mittels Pulsweiten-Modulation ansteuerbar ist. Ferner wäre es denkbar zusätzlich auch eine Betriebsspannung des Ventils zu berücksichtigen.

Gemäß einer vorteilhaften Weiterbildung kann ferner vorgesehen sein, dass dem Zustandsregler ergänzend Störgrößen übermittelt werden, welche durch einen Störbeobachter bestimmt werden, wobei der Störbeobachter als Eingangsgrößen die aktuelle Drehzahl, den Antriebsdruck sowie den Ventilstrom berücksichtigt. Mithilfe dieses Störbeobachters können dabei vorzugsweise zusätzliche Zustandsinformationen ermittelt werden, wobei diese Zustandsinformationen zumindest eine der folgenden Informationen umfassen:
- ein Drehmoment der durch die Druckluft angetriebenen Turbine,
- die Turbinenleistung;
- ein Schaden oder unregelmäßiger Betrieb des Instruments sowie
- ein Typ der Turbine.

Die erfindungsgemäße Vorgehensweise ermöglicht also nicht nur eine dynamische und effiziente Anpassung der Drehzahl der Turbine, sondern erlaubt darüber hinaus auch noch, zusätzliche Informationen abzuleiten, die für den Betrieb des Instruments relevant sind. Beispielsweise kann idealerweise selbstständig der Turbinentyp ermittelt und/oder festgestellt werden, ob sich ein Schaden anbahnt. Dieser eröffnet die Möglichkeit, noch vor Auftreten einer Fehlfunktion das Instrument durch ein nicht fehlerbehaftetes Instrument zu ersetzen und so Probleme beispielsweise während der Durchführung einer medizinischen Behandlung zu vermeiden. Ferner kann durch die Schätzung des Drehmoments und der Drehzahl auch die Turbinenleistung geschätzt werden, was die Möglichkeit eröffnet, die Turbinenleistung zu limitieren oder zu regulieren. Für präzise Behandlungen kann eine auf diese Weise limitierte Leistung vorteilhaft sein, wobei die geschätzte Turbinenleistung außerdem im Rahmen einer Sicherheitsfunktion genutzt werden kann, bei der z.B. bei einem dauerhaft oder schlagartig erhöhten Drehmoment ein Warnsignal ausgegeben wird. Im Extremfall kann die Turbine auch zum Stillstand gebracht werden.

Nachfolgend soll die Erfindung anhand der beiliegenden Zeichnung näher erläutert werden. Es zeigen:
- Figur 1: ein erstes Ausführungsbeispiel einer erfindungsgemäßen Einheit zum Betreiben eines medizinischen Behandlungsinstruments, welches mittels Druckluft betrieben wird;
- Figur 2: eine Weiterbildung der in Figur 1 dargestellten Einheit zum Betreiben des Behandlungsinstruments;
- Figur 3: ein Blockschaltbild zur erfindungsgemäßen Vorgehensweise der digitalisierten Drehzahlermittlung und Drehzahlregelung des Turbineninstruments und
- Figur 4: eine Weiterbildung der in Figur 3 dargestellten Vorgehensweise.

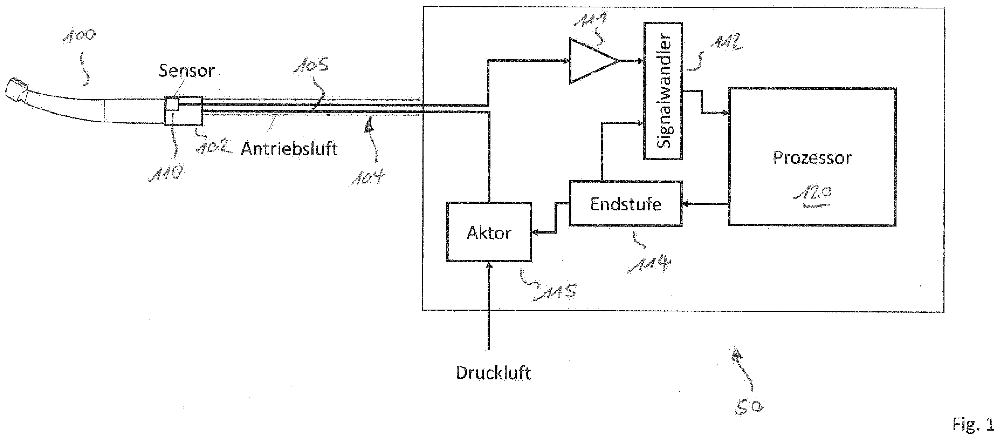

Figur 1 zeigt ein erstes Ausführungsbeispiel einer Anordnung bestehend aus einem zahnärztlichen Turbinenhandstück 100 sowie einer erfindungsgemäßen Steuereinheit 50 zum Betreiben des Turbinenhandstücks 100. Die Steuereinheit 50 ist in der Regel in die Behandlungseinheit eines zahnärztlichen Arbeitsplatzes integriert, die dann mehrere verschiedenartige Behandlungsinstrumente versorgen kann, sie kann allerdings gegebenenfalls auch als separates Gerät realisiert werden. Hauptaufgabe der Steuereinheit 50 ist hierbei, dem Turbinenhandstück 100 Druckluft 105 zur Verfügung zu stellen, mit deren Hilfe die in den Figuren nicht näher dargestellte Turbine des Handstücks 100 betrieben wird, um beispielsweise einen zahnärztlichen Bohrer mit einer bestimmten Drehzahl in Rotation zu versetzen.

Die Zuführung der Druckluft 105 erfolgt über einen Versorgungsschlauch 104, der die Einheit 50 mit dem Behandlungsinstrument 100 verbindet und in dem sich eine entsprechend geeignete Druckluftleitung erstreckt. Am vorderen Ende, also dem dem Behandlungsinstrument 100 zugewandten Ende des Versorgungsschlauchs 104 ist in der Regel eine geeignete Kupplungseinheit 102 vorgesehen, die ein einfaches und schnelles, insbesondere jedoch lösbares Anschließen des Behandlungsinstruments 100 ermöglicht, sodass dieses wahlweise mit der Einheit 50 verbunden werden kann. Derartige Kupplungseinheiten 102 sind aus dem Stand der Technik vielfach bekannt und oftmals derart ausgebildet, dass über sie zusätzlich zu der zum Betreiben der Turbine erforderlichen Druckluft 105 auch weitere Medien an das Behandlungsinstrument 100 übertragen werden können. Es kann sich hierbei um Luft und/oder Wasser handeln, welche z.B. zum Reinigen und/oder Kühlen der Behandlungsstelle genutzt werden. Auch die Übermittlung von Strom oder Licht kann über die Kupplungseinheit 102 erfolgen, wobei diese oftmals derart ausgeführt ist, dass das Behandlungsinstrument 100 relativ zur Kupplungseinheit 102 frei gedreht werden kann, um jederzeit eine ergonomisch günstige Halterung des Behandlungsinstruments 100 durch den Benutzer zu ermöglichen.

Die Menge bzw. der Druck der dem Behandlungsinstrument 100 zur Verfügung gestellten Druckluft (Antriebsluft) 105 wird hierbei mithilfe eines Aktors 115 eingestellt, der in Form eines steuerbaren Ventils ausgebildet ist. Bei der erfindungsgemäßen Einheit 50 ist vorgesehen, eine Druckregelung vorzunehmen, um letztendlich die Drehzahl der Turbine des Handstücks 100 auf einen gewünschten Sollwert einzustellen. Hierfür wird mithilfe eines nachfolgend näher beschriebenen Sensors 110 ein die Drehzahl repräsentierendes Signal ermittelt, welches nachfolgend durch die Einheit 50 bei der Ansteuerung des Aktors 115 berücksichtigt wird. Verantwortlich hierfür ist ein interner Prozessor 120, der anhand des Signals des Sensors 110 die aktuelle Drehzahl der Turbine bestimmt und darauf basierend den Aktor 115 ansteuert. Genau genommen wird hierbei das Signal des Sensors 110 zunächst mithilfe eines Verstärkers 111 aufbereitet und nach entsprechender Umwandlung in ein Digitalsignal durch einen Signalwandler 112 dem Prozessor 120 zugeführt. Wie im Folgenden näher beschrieben wird, ermittelt der Prozessor 120 auf Basis des ihm zur Verfügung gestellten digitalen Signals die aktuelle Drehzahl des Behandlungsinstruments 100 und gibt ein entsprechend geeignetes Steuersignal an eine Endstufe 114 aus, die darauf basierend den Aktor 115 ansteuert. Im vorliegenden Fall wird die von dem Prozessor 120 ermittelte Stellgröße über einen Pulsweitenmodulator an einen Leistungsverstärker weitergereicht und an das Verstellventil ausgegeben.

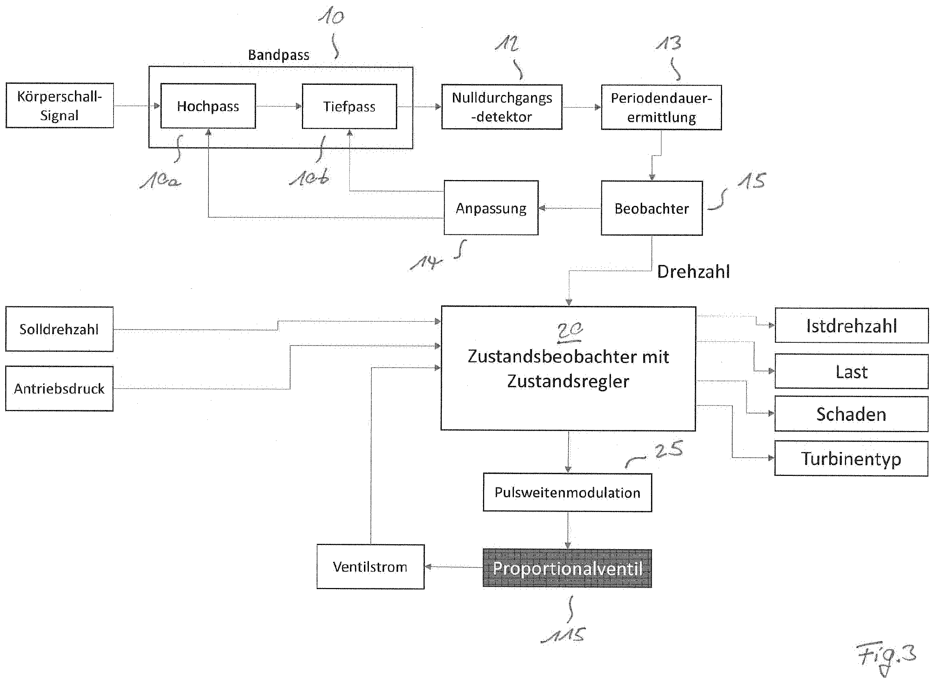

Die Signalverarbeitung des Prozessors 120 umfasst also einerseits die Ermittlung der aktuellen Drehzahl der Turbine des Behandlungsinstruments 100 auf Basis des Signals des Sensors 110 sowie andererseits die Berechnung eines geeigneten Ansteuersignals zum Betreiben des Aktors 115, um die Drehzahl des Behandlungsinstruments 100 auf einen gewünschten Sollwert zur regeln. Für beide Prozesse schlägt die vorliegende Erfindung jeweils Verbesserungen vor, wobei im Folgenden zunächst die erfindungsgemäße Vorgehensweise zum Ermitteln der aktuellen Drehzahl der Turbine erläutert werden soll. Diese ist schematisch im oberen Teil von Figur 3 gezeigt, die nachfolgend näher erläutert werden soll.

Wie bereits erwähnt nutzt hierbei das erfindungsgemäße Verfahren ein während des Betriebs des Behandlungsinstruments 100 entstehendes Körperschallsignal, welches mithilfe des Sensors 110 erfasst und in der nachfolgend näher beschriebenen Weise verarbeitet wird. Bei diesem Sensor 110 kann es sich beispielsweise um ein akustisches Mikrofon, einen MEMS-(Micro-Electro-Mechanical Systems)-Sensor oder einen Piezowandler handeln, wobei der Piezowandler besonders bevorzugt verwendet wird, da er im Vergleich zu den alternativen Sensor-Varianten eine bessere Signalqualität liefert. Grundsätzlich wäre allerdings auch die Verwendung eines Mikrofons oder eines anderen Schallwandlers (elektrodynamisch oder ähnlich) denkbar.

Der Sensor 110 wird hierbei nahe der Turbine des Behandlungsinstruments 100 angeordnet, also vorzugsweise an dem dem Instrument 100 zugewandten Ende des Versorgungsschlauchs 104 oder in der Kupplungseinheit 102. Die Platzierung in der Kupplungseinheit 102 hat sich hierbei als vorteilhaft erwiesen, da an dieser Stelle der Körperschall optimal erfasst werden kann. Grundsätzlich könnte der Sensor 110 natürlich auch an bzw. in dem Instrument 100 selbst angeordnet sein, dies ist allerdings nicht zwingend erforderlich und würde zu einem komplexeren Aufbau des Instruments 100 führen, der bei der dargestellten Positionierung in der Kupplungseinheit 102 vermieden wird. Das von dem Sensor 110 erfasste Signal wird dann zunächst durch den bereits erwähnten und in Figur 1 gezeigten geeigneten Verstärker 111 aufbereitet und durch den Signalwandler 112 (AD-Wandler) digitalisiert, wobei dann die weitere digitale Signalverarbeitung wie in Figur 3 dargestellt erfolgt.

Hierbei ist vorgesehen, dass das digitalisierte Signal zunächst mithilfe eines Bandpassfilters 10 verarbeitet wird, der im dargestellten Fall einen Hochpass 10a und einen Tiefpass 10b beinhaltet (alternativ hierzu kann der Bandpassfilter 10 auch als eigenständiges Filter ausgeführt sein) und dessen Hauptaufgabe darin besteht, eine Offsetbereinigung und die Kompensation von Unter- und Oberwellen durchzuführen, welche je nach Lastfall, eingesetztem Werkzeug und bearbeitendem Material dominanter als das eigentliche Drehzahlsignal werden können. Die Grenzfrequenzen für den Hochpass 10a und den Tiefpass 10b werden - wie nachfolgend erläutert - variabel angepasst, wobei das durch den Bandpassfilter 10 aufbereitete Signal dann nachfolgend einer Nulldurchgangserkennung mittels eines Nulldurchgangsdetektors 12 unterzogen wird. Darauf basierend erfolgt in einem nächsten Schritt die Ermittlung einer Periodendauer 13, wobei abschließend auf Basis der ermittelten Periodendauer durch einen Beobachter 15 modellbasiert eine Drehzahl geschätzt wird, die für die später erläuterte Drehzahlregelung den aktuellen Ist-Wert darstellt.

Entscheidend für den erfindungsgemäßen Prozess ist, dass auf Basis der ermittelten Periodendauer mittels der Priodendauerermittlungseinheit 13 nicht unmittelbar die Drehzahl der Turbine bestimmt wird, sondern diese durch den bereits erwähnten modellbasierten Beobachter 15 geschätzt wird. In der Regelungstechnik wird bekanntlich unter einem Beobachter allgemein ein System oder ein Algorithmus verstanden, der entwickelt wurde, um nicht messbare Zustandsgrößen eines dynamischen Systems zu schätzen. Das Ziel eines Beobachters ist es, diese internen Zustände zu ermitteln, basierend auf den verfügbaren Messungen der Systemausgänge und bekannten Eingängen. Beobachter sind besonders wichtig in Situationen, in denen einige Zustände eines Systems aus technischen oder wirtschaftlichen Gründen nicht direkt gemessen werden können oder starke Störungen bzw. Ungenauigkeiten beinhalten.

Ein Beobachter nutzt hierbei ein mathematisches Modell des zu beobachtenden Systems. Dieses Modell beschreibt, wie die Zustände und Ausgänge des Systems von dessen Eingängen beeinflusst werden. Durch die Kombination des Modells mit den tatsächlichen Eingangs- und Ausgangsdaten kann der Beobachter dann Schätzungen für die nicht direkt messbaren oder stark störbehafteten Zustände generieren.

Bei dem in Figur 3 gezeigten Ausführungsbeispiel liegt dem Beobachter 15 ein einfaches Bewegungsmodell zugrunde, welches ein Schätzen der Drehzahl ermöglicht. Bei einer nachfolgend noch näher beschriebenen Weiterentwicklung hingegen kann ein komplexeres mathematisches Modell des Ventils bzw. Aktors 115, des Schlauchs 104 und der Turbine des Instruments 100 zum Einsatz kommen, welches es dem Beobachter 15 ermöglicht, auf Basis der ihm zur Verfügung gestellten Informationen nochmals genauer die aktuelle Drehzahl zu ermitteln.

Wenn also beispielsweise das Körperschallsignal für die Drehzahlermittlung aufgrund dominanter Unter- und Oberwellen stark gestört ist, wird der Beobachter 15 zur Schätzung einer genaueren Drehzahl sich eher auf das dem System zugrundeliegende Modell verlassen, während hingegen bei einem ungestörten oder nur leicht gestörten Signal der Beobachter 15 sich eher auf die Messung, also auf die ermittelte Periodendauer verlässt. Es hat sich gezeigt, dass auf diesem Wege deutlich genauer und insbesondere unabhängig von einem aktuellen Betriebszustand des Instruments 100 eine Drehzahl der Turbine bestimmt werden kann. Dabei kann vorgesehen sein, dass die Periodendauer des digitalisierten Körperschallsignals über mehrere Perioden hinweg bestimmt und der daraus resultierende Mittelwert als Eingangsgröße für den Beobachter 15 verwendet wird.

Dabei ist zu berücksichtigen, dass auf Basis des durch den Bandpass 10 gefilterten Signals die Drehzahl des Turbinenhandstücks 100 verhältnismäßig einfach berechnet werden könnte, sofern die Turbine ohne Belastung oder mit einer lediglich geringen Belastung läuft. In diesem Fall ist der Anteil der die Drehzahl repräsentierenden Grundwelle des von dem Sensor 110 erfassten Vibrationssignals im Vergleich mit weiteren Unter- oder Oberwellen ausreichend groß. In anderen Fällen allerdings, insbesondere bei einer starken Belastung der Turbine kann diese Grundwelle nahezu verschwinden bzw. die Unter- und Oberwellen des Körperschallsignals werden so dominant, dass eine einfache Berechnung der Drehzahl basierend allein auf dem durch den Bandpassfilter gefilterten Signals stark fehlerbehaftet wäre.

Um dieses Problem zu vermeiden, wird erfindungsgemäß ebenfalls der bereits mehrfach erwähnte Beobachter 15 eingesetzt. Dessen Aufgabe besteht auch darin, den Bandpassfilter 10 so einzustellen, dass primär die Grundwelle durchgelassen wird und die Unterwellen und Oberwellen unterdrückt werden. Der Beobachter 15 schätzt hierbei, in welchem Bereich die Drehzahl liegt und stellt das Filter 10 entsprechend ein, wertet das gefilterte Signal über den Nulldurchgangsdetektor 12 und die Periodendauerermittlungseinheit 13 aus und korrigiert darauf basierend die Schätzung. Der Beobachter 15 stellt dabei z.B. sicher, dass keine plötzlichen (physikalisch unmöglichen) Drehzahlsprünge erfolgen können, die durch Oberwellen oder Unterwellen erfolgen können, da z.B. die Beschleunigung eines physikalischen Systems endlich ist.

Ein weiterer wesentlicher Bestandteil des erfindungsgemäßen Konzepts zur Bestimmung der Drehzahl des Turbinenhandstücks 100 besteht also darin, dass der Bandpassfilter 10 hinsichtlich seiner Wirkung im laufenden Betrieb angepasst wird, um das von dem Sensor 110 zur Verfügung gestellte Signal optimal aufzubereiten. Nach Schätzung der aktuellen Drehzahl durch den Beobachter 15 erfolgt also eine Anpassung 14 der beiden Grenzfrequenzen des Bandpassfilters 10, wobei diese Anpassung 14 kontinuierlich während des laufenden Betriebs fortgesetzt wird. Diese Grenzfrequenzen werden wie oben erläutert durch den Beobachter 15 aus der geschätzten Drehzahl kontinuierlich berechnet und nachgeführt, sodass insgesamt eine schnelle und präzise Bestimmung der aktuellen Drehzahl ermöglicht wird.

Ein Vorteil der erfindungsgemäßen Vorgehensweise besteht auch darin, dass das von dem Sensor 110 zur Verfügung gestellte Signal nicht aufwendig z.B. im Rahmen einer Fourier-Transformation verarbeitet werden muss, wodurch der Rechenaufwand zur Verarbeitung des Signals im Vergleich zu bekannten Lösungen reduziert und trotz allem die Dynamik der Drehzahlbestimmung und damit letztendlich der Regelung bei der Ansteuerung des Behandlungsinstruments 100 erhöht wird.

Der auf diese Weise ermittelte Drehzahlwert kann dann als Eingangsparameter für eine Ansteuerung des Behandlungsinstruments 100 verwendet werden, wobei wie bereits erläutert mithilfe des Aktors 115 der Druck oder das Volumen der dem Behandlungsinstrument 100 zur Verfügung gestellten Druckluft eingestellt wird. Eine Möglichkeit hierfür würde darin bestehen, auf bekannte Regelungskonzepte zurückzugreifen, wobei sich in diesem Fall z.B. die Verwendung eines bekannten PID-Reglers anbieten würde.

Gemäß einem zweiten Aspekt der vorliegenden Erfindung soll allerdings auch die Ansteuerung des Aktors 115 optimiert werden, wobei dies nachfolgend anhand der unteren Hälfte von Figur 3 näher erläutert wird.

Die letztendliche Ansteuerung der Turbine erfolgt dabei über den bereits erwähnten Aktor 115, der als Verstellventil ausgeführt ist, welches den zugeführten Luftstrom zur Turbine stellen bzw. regeln kann. Bevorzugt kommt hierbei ein elektromagnetisches Proportionalventil 115 zum Einsatz, welches von dem Prozessor 120 per Pulsweiten-Modulation 25 angesteuert wird. Grundsätzlich könnten auch andere stellbare bzw. regelbare Ventile zum Einsatz kommen, sofern diese über eine ausreichende Stelldynamik und Auflösung verfügen. Das bereits erwähnte Proportionalventil 115 hat sich hierbei allerdings als vorteilhaft erwiesen.

Der sich bei Ansteuerung des Proportionalventils 115 ergebende elektrische Ventilstrom kann dann erfasst, digitalisiert und wiederum dem Prozessor 120 zugeführt werden. Ergänzend wäre denkbar, auch die Betriebsspannung sowie die sich ergebende Ventilspannung als Parameter zu erfassen und in die Regelung zurückzuführen. Diese Parameter sind allerdings lediglich dann erforderlich, wenn der Prozessor 120 die Regelung des Proportionalventils 115 selbst durchführt. Wird hingegen ein eigenständiges Proportionalventil mit einer geeigneten analogen oder digitalen Schnittstelle verwendet, so kann durch den Prozessor 120 auch direkt die Stellgröße zur Ansteuerung des Proportionalventils 115 ausgegeben werden.

Wesentlich ist, dass erfindungsgemäß das Steuersignal für das Ventil 115 mithilfe eines modellbasierten Zustandsreglers berechnet wird, dem ein mathematisches Modell hinsichtlich des Ventils 115, des Schlauchs 104 und der Turbine zugrunde liegt und der als digitale Eingangsgrößen insbesondere die aktuelle Drehzahl (idealerweise erhalten von dem Beobachter 15) sowie die gewünschte Solldrehzahl berücksichtigt. Zustandsregler verwenden allgemein ein Modell des zu regelnden Systems in Form von Zustandsgleichungen, welche die Dynamik des Systems mithilfe von Zustandsvariablen beschreiben. Ein Zustandsregler steuert das zugehörige System durch Rückführung aller Zustandsvariablen, um das Systemverhalten direkt zu beeinflussen. Dies ermöglicht eine genauere und umfassendere Kontrolle über das System, insbesondere bei komplexen oder mehrdimensionalen Systemen. Derartige Zustandsregler sind in Situationen vorteilhaft, in denen ein präzises und schnelles Ansprechen des Systems erforderlich ist und alle Zustandsvariablen entweder direkt messbar sind oder geschätzt werden können. Im Vergleich zu dem oben erwähnten klassischen PID-Regler ermöglicht das erfindungsgemäße Regel-Konzept somit eine sehr dynamische Regelung der Drehzahl ohne größere Überschwingungen.

Ein im Rahmen der Datenverarbeitung durch den Prozessor 120 ebenfalls realisierter Zustandsbeobachter kann dann entsprechend einer vorteilhaften Weiterbildung dazu genutzt, basierend auf den zur Verfügung stehenden Eingangsinformationen zusätzliche Zustände des Systems zu ermitteln. Es kann sich hierbei neben der durch den Beobachter 15 geschätzten Ist-Drehzahl um die Last, welche beispielsweise das Drehmoment sein kann, einen eventuellen Schaden des Turbineninstruments und/oder den Typ der Turbine handeln. Basierend auf dem auf diese Weise ermittelten Drehmoment könnte ferner dann auch die Turbinenleistung bestimmt werden.

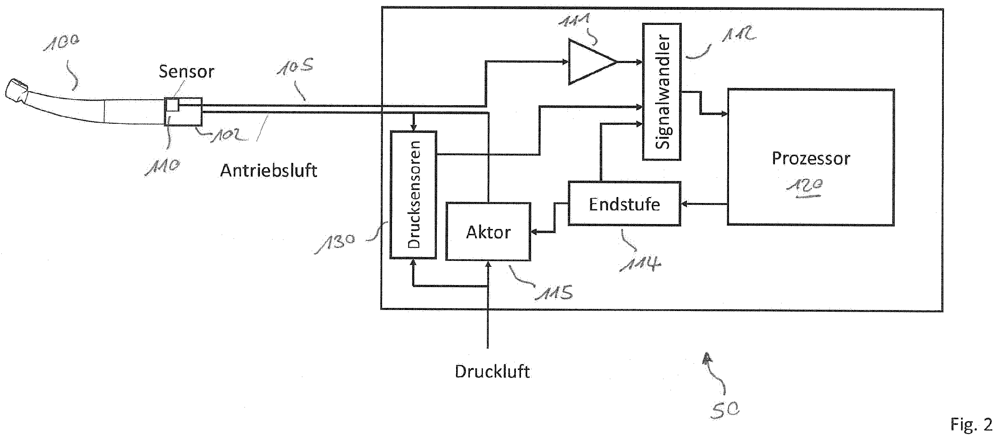

Dabei kann in einer Weiterbildung des bislang beschriebenen Konzepts - wie in den Figuren 2, 3 und 4 gezeigt - als weitere Eingangsgröße der Druck der dem Instrument 100 zur Verfügung gestellten Antriebsluft 105 berücksichtigt werden, wobei hierzu entsprechende Drucksensoren 130 vorgesehen sind, die mit der Zuführungsleitung 104 für die Druckluft 105 gekoppelt sind. Auch der elektrische Ventilstrom kann zur Verbesserung der Regelungsdynamik zusätzlich berücksichtigt werden.

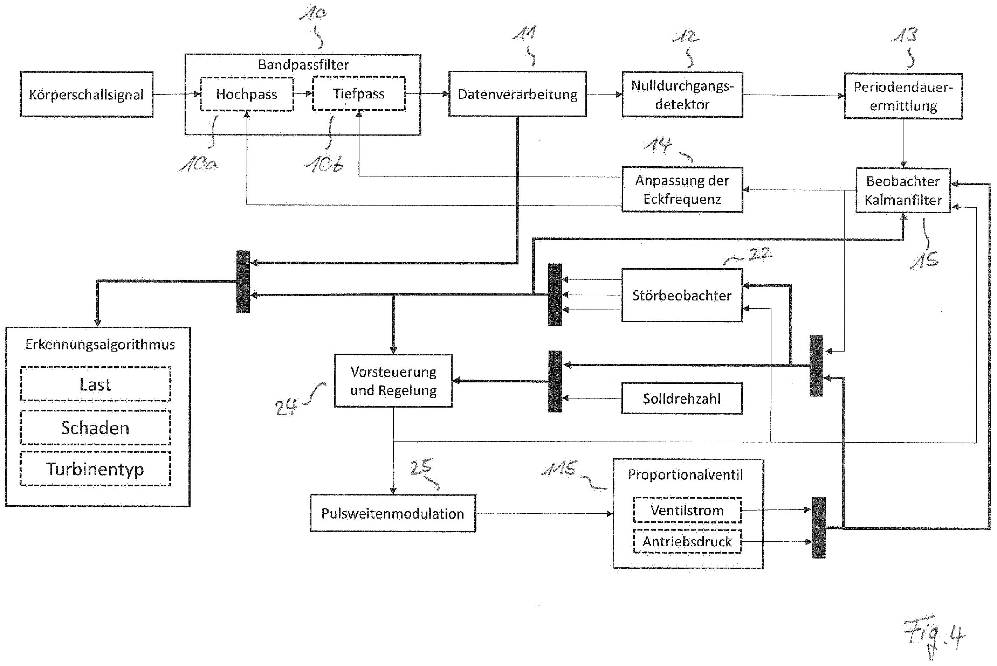

Eine besonders bevorzugte Ausgestaltung des Systems, die in Figur 4 gezeigt ist, besteht darin, dass der Zustandsbeobachter 22, der in Figur 4 getrennt von der für die Regelung und Ansteuerung des Ventils 115 verantwortlichen Einheit 24 gezeigt ist, als Störbeobachter ausgebildet ist. Ein Störbeobachter in der Regelungstechnik ist speziell dafür entworfen, Störungen, die auf ein System einwirken, zu erkennen und zu schätzen. Diese Störungen können interne oder externe Einflüsse sein, die das Verhalten des Systems in einer unerwünschten Weise beeinflussen, wie zum Beispiel plötzliche Laständerungen, Reibung oder unvorhersehbare externe Kräfte. Die Aufgabe eines Störbeobachters besteht dabei darin, solche Störungen zu identifizieren und zu quantifizieren, sodass korrigierende Maßnahmen ergriffen werden können, um die Auswirkungen der Störungen auf das System zu minimieren.

Im vorliegenden Fall werden dem Störbeobachter 22 also die geschätzte Drehzahl mitsamt dem Antriebsdruck und dem Ventilstrom zugeführt, wobei basierend auf diesen Messgrößen und dem System zugrundeliegenden mathematischen Modell dann die Möglichkeit besteht, zusätzliche Informationen zu schätzen. Diese Informationen (Störgrößen genannt) stellen hier Abweichungen zwischen dem Modell und dem realen System bestehend aus Ventil, Schlauch und Turbine dar. So kann auf diesem Weg zum Beispiel eine Änderung am Schlauch 104, eine Änderung am Verstellventil 115 oder das Vorhandensein einer anderen Art von Turbine als Störgröße erkannt und berücksichtigt werden, sodass es der Störbeobachter 22 ermöglicht, unvermeidbare Änderungen im System zu schätzen und zu kompensieren. Im Rahmen eines entsprechenden Erkennungsalgorithmus kann also beispielsweise ein Pflegezustand oder eine Alterung oder Schaden des Behandlungsinstruments 100erkannt werden oder auch das Vorhandensein einer Turbine mit unterschiedlichen Systemeigenschaften erkannt und entsprechend kompensiert werden. Auch kann die durch den Störbeobachter 22 ermittelte und durch den Erkennungsalgorithmus erkannte Last, beispielsweise das Drehmoment, genutzt werden, um damit die dem Behandlungsinstrument 100 zugeführte Wassermenge, beispielsweise als Spraywasser zur Kühlung der Behandlungsstelle, lastabhängig zu regeln. Selbst im Falle größerer Änderungen an dem System ist somit das erfindungsgemäße Regelkonzept in der Lage, durchgehend eine gute Regeldynamik zu liefern und die Turbine auf die gewünschte Drehzahl einzustellen.

Eine andere Weiterentwicklung des in Figur 4 gezeigten Ausführungsbeispiels besteht darin, dass der für die Ermittlung der Drehzahl verantwortliche Beobachter 15 nunmehr als sogenannter Kalman-Filter ausgeführt ist. Hierbei handelt es sich um einen spezialisierten Beobachter für Systeme, bei denen Unsicherheiten und Rauschen sowohl in den Messungen als auch im Prozess selbst präsent sind. Der Kalman-Filter ist optimal im Sinne der Minimierung der geschätzten Fehlerkovarianz und wird häufig in Anwendungen mit stochastischen Störungen verwendet.

In dieser weiterentwickelten Version des Beobachters 15 in Fig. 4 kann beispielsweise berücksichtigt werden, dass eine bestimmte Drehzahl nur vorherrschen kann, wenn auch ein gewisser Druck und ein gewisses Ansteuersignal des Stellventils vorherrscht oder dass beispielsweise beim Öffnen des Ventils bei gleicher Last die Drehzahl tendenziell steigen sollte. Dadurch wird die Schätzung der Drehzahl robuster und dynamischer. Dem Beobachter werden in diesem Fall im Vergleich zu der einfachen Variante von Figur 3 zusätzliche Informationen zur Verfügung gestellt, also z.B. oder aber auch die von dem Störbeobachter 22 ermittelten Informationen.

Dabei kann anstelle einer Steuerung des Drucks der durch das Proportionalventil 115 zur Verfügung gestellten Druckluft 105 auch eine Volumensteuerung oder Volumenregelung der Druckluft 105 vorgenommen werden. Ferner besteht wie bereits erwähnt die Möglichkeit, die Steuerung des Ventils 115 außerhalb des Mikrokontrollers 120 eigenständig zu realisieren. In diesem Fall werden dann Ventile 115 verwendet, welche direkt mit einem analogen Sollwertsignal oder digital angesteuert werden, wobei in diesem Fall dann auf einen DA-Wandler in der Endstufe 24, 25 bzw. die Ansteuerung mittels PWM-Signale verzichtet werden kann.

Schließlich ist darauf hinzuweisen, dass das erfindungsgemäße Regelungskonzept auch unabhängig von der Frage, in welcher Weise die Ist-Drehzahl der Turbine ermittelt wird, zum Einsatz kommen kann. Beispielsweise wäre es denkbar, die Drehzahl der Turbine mit den aus dem Stand der Technik bekannten, oben beschriebenen Lösungen zu ermitteln und die Regelung der Drehzahl auf einen gewünschten Sollwert in erfindungsgemäßer Weise mithilfe eines modellbasierten Zustandsreglers vorzunehmen. In analoger Weise kann wie bereits erwähnt die in der erfindungsgemäßen Weise ermittelte Drehzahl auch anderweitig zum Ansteuern des die Druckluft 105 zur Verfügung stellenden Aktors 115 genutzt werden, wobei jedoch idealerweise die beschriebene Drehzahlermittlung mit der beschriebenen Drehzahlregelung kombiniert wird, da hierdurch besonders effizient, genau und mit hoher Dynamik die Drehzahl einer Turbine eingestellt werden kann. Da in beiden Fällen auch von dem gleichen mathematischen Modell hinsichtlich des anzusteuernden bzw. zu regelnden Systems ausgegangen wird, können entsprechende Vorteile gemeinsam und synergistisch genutzt.

## Patentansprüche

1. Verfahren zur Bestimmung der Drehzahl eines medizinischen, insbesondere zahnmedizinischen Behandlungsinstruments (100), welches eine mittels Druckluft (105) betriebene Turbine aufweist, wobei das Verfahren die folgenden Schritte beinhaltet:
a) Erfassen eines analogen Körperschallsignals mit Hilfe eines Sensors (110), der einen Körperschall des Behandlungsinstruments (100) aufnimmt,
b) Umwandeln des von dem Sensor (110) erfassten analogen Körperschallsignals in ein digitalisiertes Körperschallsignal mittels eines Signalwandlers (112),
**dadurch gekennzeichnet,**
**dass** das Verfahren ferner folgende Schritte beinhaltet:
c) Ermitteln einer Periodendauer des digitalisierten Körperschallsignals in einer Periodenermittlungseinheit (13) auf Basis einer Nulldurchgangserkennung in einem Nulldurchgangserkennungsdetektor (12), und
d) Schätzen einer modellbasierten Drehzahl durch einen Beobachter (15) auf Basis der ermittelten Periodendauer,
wobei das digitalisierte Signal vor der Nulldurchgangserkennung mit Hilfe eines Bandpassfilters (10) gefiltert wird und die Grenzfrequenzen des Bandpassfilters (10) durch den Beobachter (15) abhängig von der modellbasierten Drehzahl kontinuierlich angepasst werden.

2. Verfahren nach Anspruch 1,
**dadurch gekennzeichnet,**
**dass** dem Beobachter (15) für die Schätzung der modellbasierten Drehzahl ergänzend zu der ermittelten Periodendauer zumindest die Steuergröße eines zum Anpassen des Antriebsdrucks verwendeten Ventilelements (115) als Eingangsgröße zugeführt wird,
wobei bevorzugt dem Beobachter (15) zusätzlich auch der Antriebsdruck der dem Behandlungsinstrument (100) zugeführten Druckluft (105) zugeführt wird.

3. Verfahren nach Anspruch 2,
**dadurch gekennzeichnet,**
**dass** der Beobachter (15) als Kalmanfilter implementiert ist.

4. Verfahren nach einem der vorherigen Ansprüche,
**dadurch gekennzeichnet,**
**dass** die Periodendauer des digitalisierten Körperschallsignals über mehrere Perioden hinweg bestimmt und der daraus resultierende Mittelwert als Eingangsgröße für den Beobachter (15) verwendet wird.

5. Verfahren nach einem der vorherigen Ansprüche,
**dadurch gekennzeichnet,**
**dass** der Sensor (110) als Mikrofon, MEMS-Sensor oder Piezowandler ausgeführt ist.

6. Verfahren nach einem der vorherigen Ansprüche,
**dadurch gekennzeichnet,**
**dass** der Sensor (110) in einem Schlauch (104), der zur Versorgung des medizinischen Behandlungsinstruments (100) dient, oder in einer Kupplungseinheit (102), die zum Anschließen des Behandlungsinstruments (100) vorgesehen ist, angeordnet ist.

7. Verfahren zur Regelung der Drehzahl eines medizinischen, insbesondere eines zahnmedizinischen Behandlungsinstruments (100), welches eine mittels Druckluft (105) betriebene Turbine aufweist,
wobei die der Turbine zugeführte Druckluft (105) mit Hilfe eines elektrisch ansteuerbaren Ventils (115) eingestellt wird und die Ansteuerung des Ventils (115) mit Hilfe eines Reglers erfolgt, dem als Eingangsgröße die aktuelle Drehzahl zugeführt wird, wobei die aktuelle Drehzahl nach dem Verfahren gemäß einem der Ansprüche 1 bis 6 ermittelt wird,
und wobei es sich bei dem Regler beispielsweise um einen PID-Regler handelt.

8. Verfahren zur Regelung der Drehzahl eines medizinischen, insbesondere eines zahnmedizinischen Behandlungsinstruments (100), welches eine mittels Druckluft (105) betriebene Turbine aufweist,
wobei die der Turbine zugeführte Druckluft (105) mit Hilfe eines elektrisch ansteuerbaren Ventils (115) eingestellt wird und ein Steuersignal für das Ventil (115) durch einen modellbasierten Zustandsregler (20) auf Basis zumindest folgender digitalisierter Eingangsgrößen bestimmt wird:
• einer aktuellen Drehzahl des medizinischen Behandlungsinstruments (100),
• einer Solldrehzahl für das medizinische Behandlungsinstrument (100);
und wobei die aktuelle Drehzahl nach dem Verfahren gemäß einem der Ansprüche 1 bis 6 ermittelt wird.

9. Verfahren nach Anspruch 8,
**dadurch gekennzeichnet,**
**dass** zumindest einer der folgenden Parameter als weitere Eingangsgröße für den Zustandsbeobachter (20) genutzt wird:
• der Antriebsdruck der dem Behandlungsinstruments (100) zugeführten Druckluft (105),
• ein elektrischer Ventilstrom.

10. Verfahren nach einem der Ansprüche 8 und 9,
**dadurch gekennzeichnet,**
**dass** das Ventil (115) durch ein elektromagnetisches Proportionalventil gebildet ist, das durch Pulsweitenmodulation ansteuerbar ist.

11. Verfahren nach einem der Ansprüche 8 bis 10,
**dadurch gekennzeichnet,**
**dass** dem Zustandsregler (20) ergänzend Störgrößen übermittelt werden, welche durch einen Störbeobachter (22) bestimmt werden, wobei der Störbeobachter (22) als Eingangsgrößen die aktuelle Drehzahl, den Antriebsdruck sowie den Ventilstrom berücksichtigt.

12. Verfahren nach Anspruch 11,
**dadurch gekennzeichnet,**
**dass** mit Hilfe des Störbeobachters (22) zusätzliche Zustandsinformationen ermittelt werden, wobei die Zustandsinformationen zumindest eine der folgenden Informationen umfassen:
• ein Drehmoment der durch die Druckluft (105) angetriebenen Turbine;
• die Turbinenleistung;
• ein Schaden oder ein unregelmäßiger Betrieb des Instruments (100);
• einen Typ der Turbine.

13. Einheit (50) zum Betreiben eines medizinischen, insbesondere zahnmedizinischen Behandlungsinstruments (100), welches eine mittels Druckluft (105) betriebene Turbine aufweist,
wobei die Einheit (50) einen Sensor (110) zum Aufnehmen eines analogen Körperschallsignals des Behandlungsinstruments (100) aufweist,
**dadurch gekennzeichnet,**
**dass** die Einheit (50) dazu ausgebildet ist, basierend auf dem von dem Sensor (110) erfassten Körperschallsignal eine Drehzahl der Turbine nach dem Verfahren gemäß einem der Ansprüche 1 bis 6 zu bestimmen.

14. Einheit (50) zum Betreiben eines medizinischen, insbesondere zahnmedizinischen Behandlungsinstruments (100) nach Anspruch 13,
wobei die Einheit (50) ein steuerbares Ventil (115) zum Einstellen einer der Turbine zugeführten Druckluft (105) aufweist und dazu ausgebildet ist, die Drehzahl des Behandlungsinstruments (100) gemäß dem Verfahren nach einem der Ansprüche 7 bis 12 einzustellen.

## Claims

1. Method for determining the rotational speed of a medical, in particular dental, treatment instrument (100) which has a turbine operated by means of compressed air (105), wherein the method includes the following steps:
a) capturing an analogue structure-borne sound signal with the aid of a sensor (110) which records a structure-borne sound of the treatment instrument (100),
b) converting the analogue structure-borne sound signal captured by the sensor (110) into a digitized structure-borne sound signal by means of a signal converter (112),
**characterized**
**in that** the method further includes the following steps:
c) determining a period duration of the digitized structure-borne sound signal in a period determination unit (13) on the basis of zero crossing recognition in a zero crossing recognition detector (12), and
d) estimating a model-based rotational speed by an observer (15) on the basis of the determined period duration,
wherein the digitized signal is filtered with the aid of a bandpass filter (10) before the zero crossing recognition and the cut-off frequencies of the bandpass filter (10) are continuously adapted by the observer (15) depending on the model-based rotational speed.

2. Method according to Claim 1,
**characterized**
**in that**, in addition to the determined period duration, at least the control variable of a valve element (115) used to adapt the drive pressure is supplied as an input variable to the observer (15) for the estimation of the model-based rotational speed,
wherein the drive pressure of the compressed air (105) supplied to the treatment instrument (100) is preferably additionally also supplied to the observer (15).

3. Method according to Claim 2,
**characterized**
**in that** the observer (15) is implemented as a Kalman filter.

4. Method according to one of the preceding claims, **characterized**
**in that** the period duration of the digitized structure-borne sound signal is determined over a plurality of periods and the resulting mean value is used as an input variable for the observer (15).

5. Method according to one of the preceding claims, **characterized**
**in that** the sensor (110) is embodied as a microphone, MEMS sensor or piezo-transducer.

6. Method according to one of the preceding claims, **characterized**
**in that** the sensor (110) is arranged in a tube (104), which serves to supply the medical treatment instrument (100), or in a coupling unit (102), which is provided for connecting the treatment instrument (100).

7. Method for regulating the rotational speed of a medical, in particular a dental, treatment instrument (100) which has a turbine operated by means of compressed air (105),
wherein the compressed air (105) supplied to the turbine is set with the aid of an electrically controllable valve (115) and the valve (115) is controlled with the aid of a regulator, to which the current rotational speed is supplied as an input variable, wherein the current rotational speed is determined by the method according to one of Claims 1 to 6, and wherein the regulator is, for example, a PID regulator.

8. Method for regulating the rotational speed of a medical, in particular a dental, treatment instrument (100) which has a turbine operated by means of compressed air (105),
wherein the compressed air (105) supplied to the turbine is set with the aid of an electrically controllable valve (115) and a control signal for the valve (115) is determined by a model-based state regulator (20) on the basis of at least the following digitized input variables:
• a current rotational speed of the medical treatment instrument (100),
• a target rotational speed for the medical treatment instrument (100);
and wherein the current rotational speed is determined by the method according to one of Claims 1 to 6.

9. Method according to Claim 8,
**characterized**
**in that** at least one of the following parameters is used as a further input variable for the state observer (20):
• the drive pressure of the compressed air (105) supplied to the treatment instrument (100),
• an electric valve current.

10. Method according to one of Claims 8 and 9,
**characterized**
**in that** the valve (115) is formed by an electromagnetic proportional valve which can be controlled by pulse width modulation.

11. Method according to one of Claims 8 to 10,
**characterized**
**in that** disturbance variables which are determined by a disturbance observer (22) are additionally transmitted to the state regulator (20), wherein the disturbance observer (22) takes into account the current rotational speed, the drive pressure and the valve current as input variables.

12. Method according to Claim 11,
**characterized**
**in that** additional state information is determined with the aid of the disturbance observer (22), wherein the state information comprises at least one of the following items of information:
• a torque of the turbine driven by the compressed air (105);
• the turbine power;
• damage or irregular operation of the instrument (100);
• a type of turbine.

13. Unit (50) for operating a medical, in particular dental, treatment instrument (100) which has a turbine operated by means of compressed air (105),
wherein the unit (50) has a sensor (110) for recording an analogue structure-borne sound signal of the treatment instrument (100),
**characterized**
**in that** the unit (50) is designed to determine a rotational speed of the turbine according to the method according to one of Claims 1 to 6 on the basis of the structure-borne sound signal captured by the sensor (110).

14. Unit (50) for operating a medical, in particular dental, treatment instrument (100) according to Claim 13, wherein the unit (50) has a controllable valve (115) for setting compressed air (105) supplied to the turbine and is designed to set the rotational speed of the treatment instrument (100) according to the method according to one of Claims 7 to 12.

## Revendications

1. Procédé de détermination de la vitesse de rotation d'un instrument de traitement médical, en particulier dentaire (100), qui comporte une turbine entraînée par de l'air comprimé (105), le procédé comprenant les étapes suivantes :
a) l'acquisition d'un signal analogique de bruit solidien à l'aide d'un capteur (110) qui capte un bruit solidien de l'instrument de traitement (100),
b) la conversion du signal analogique de bruit solidien acquis par le capteur (110) en un signal de bruit solidien numérisé au moyen d'un convertisseur de signal (112), **caractérisé en ce que**
le procédé comprend en outre les étapes suivantes :
c) la détermination d'une période du signal de bruit solidien numérisé dans une unité de détermination de période (13) sur la base d'une détection de passage par zéro dans un détecteur de passage par zéro (12), et
d) l'estimation d'une vitesse de rotation fondée sur un modèle par un observateur (15) sur la base de la période déterminée,
dans lequel le signal numérisé est filtré à l'aide d'un filtre passe-bande (10) avant la détection de passage par zéro et les fréquences de coupure du filtre passe-bande (10) sont ajustées en continu par l'observateur (15) en fonction de la vitesse de rotation fondée sur un modèle.

2. Procédé selon la revendication 1,
**caractérisé en ce que**
au moins la grandeur de commande d'un élément de vanne (115) utilisé pour ajuster la pression d'entraînement est fournie à l'observateur (15) en tant que grandeur d'entrée pour l'estimation de la vitesse de rotation fondée sur un modèle, en complément de la période déterminée,
dans lequel, de préférence, la pression d'entraînement de l'air comprimé (105) fourni à l'instrument de traitement (100) est également fournie en outre à l'observateur (15).

3. Procédé selon la revendication 2,
**caractérisé en ce que**
l'observateur (15) est mis en œuvre sous la forme d'un filtre de Kalman.

4. Procédé selon l'une quelconque des revendications précédentes,
**caractérisé en ce que**
la période du signal de bruit solidien numérisé est déterminée sur plusieurs périodes et la valeur moyenne qui en résulte est utilisée en tant que grandeur d'entrée pour l'observateur (15).

5. Procédé selon l'une quelconque des revendications précédentes,
**caractérisé en ce que**
le capteur (110) est réalisé sous la forme d'un microphone, d'un capteur MEMS ou d'un transducteur piézoélectrique.

6. Procédé selon l'une quelconque des revendications précédentes,
**caractérisé en ce que**
le capteur (110) est disposé dans un tuyau flexible (104) servant à alimenter l'instrument de traitement médical (100), ou dans une unité de couplage (102) prévue pour raccorder l'instrument de traitement (100).

7. Procédé de régulation de la vitesse de rotation d'un instrument de traitement médical, en particulier d'un instrument de traitement dentaire (100), qui comporte une turbine entraînée par de l'air comprimé (105),
dans lequel l'air comprimé (105) fourni à la turbine est ajusté à l'aide d'une vanne (115) pouvant être commandée électriquement et la commande de la vanne (115) est effectuée à l'aide d'un régulateur auquel la vitesse de rotation actuelle est fournie en tant que grandeur d'entrée, dans lequel la vitesse de rotation actuelle est déterminée selon le procédé selon l'une quelconque des revendications 1 à 6, et dans lequel le régulateur est par exemple un régulateur PID.

8. Procédé de régulation de la vitesse de rotation d'un instrument de traitement médical, en particulier d'un instrument de traitement dentaire (100), qui comporte une turbine entraînée par de l'air comprimé (105),
dans lequel l'air comprimé (105) fourni à la turbine est ajusté à l'aide d'une vanne (115) pouvant être commandée électriquement et un signal de commande pour la vanne (115) est déterminé par un régulateur d'état fondé sur un modèle (20) sur la base d'au moins les grandeurs d'entrée numérisées suivantes :
• une vitesse de rotation actuelle de l'instrument de traitement médical (100),
• une vitesse de rotation de consigne pour l'instrument de traitement médical (100) ;
et dans lequel la vitesse de rotation actuelle est déterminée par le procédé selon l'une quelconque des revendications 1 à 6.

9. Procédé selon la revendication 8,
**caractérisé en ce que**
au moins l'un des paramètres suivants est utilisé en tant que grandeur d'entrée supplémentaire pour l'observateur d'état (20) :
• la pression d'entraînement de l'air comprimé (105) fourni à l'instrument de traitement (100),
• un courant électrique de vanne.

10. Procédé selon l'une quelconque des revendications 8 et 9,
**caractérisé en ce que**
la vanne (115) est constituée d'une vanne proportionnelle électromagnétique pouvant être commandée par modulation de largeur d'impulsion.

11. Procédé selon l'une quelconque des revendications 8 à 10,
**caractérisé en ce que**
des grandeurs perturbatrices déterminées par un observateur de perturbations (22) sont transmises en complément au régulateur d'état (20), dans lequel l'observateur de perturbations (22) prend en compte, en tant que grandeurs d'entrée, la vitesse de rotation actuelle, la pression d'entraînement ainsi que le courant de vanne.

12. Procédé selon la revendication 11,
**caractérisé en ce que**
des informations d'état supplémentaires sont déterminées à l'aide de l'observateur de perturbations (22), dans lequel les informations d'état comprennent au moins l'une des informations suivantes :
• un couple de la turbine entraînée par l'air comprimé (105) ;
• la puissance de la turbine ;
• un endommagement ou un fonctionnement irrégulier de l'instrument (100) ;
• un type de turbine.

13. Unité (50) pour faire fonctionner un instrument de traitement médical, en particulier dentaire (100), qui comporte une turbine entraînée par de l'air comprimé (105),
dans laquelle l'unité (50) comporte un capteur (110) pour capter un signal analogique de bruit solidien de l'instrument de traitement (100),
**caractérisée en ce que**
l'unité (50) est conçue pour déterminer une vitesse de rotation de la turbine par le procédé selon l'une quelconque des revendications 1 à 6 sur la base du signal de bruit solidien acquis par le capteur (110).

14. Unité (50) pour faire fonctionner un instrument de traitement médical, en particulier dentaire (100), selon la revendication 13,
dans laquelle l'unité (50) comporte une vanne commandable (115) pour ajuster l'air comprimé (105) fourni à la turbine et est conçue pour ajuster la vitesse de rotation de l'instrument de traitement (100) selon le procédé selon l'une quelconque des revendications 7 à 12.
